Europäisches Patentamt

European Patent Office

Office européen des brevets

(11) Publication number: **0 132 385**
A1

# EUROPEAN PATENT APPLICATION

(21) Application number: **84304932.1**

(22) Date of filing: **19.07.84**

(51) Int. Cl.⁴: **A 01 D 34/73**, A 01 G 3/00

(30) Priority: **26.07.83 GB 8320083**
**26.09.83 GB 8325663**

(43) Date of publication of application: **30.01.85**
**Bulletin 85/5**

(84) Designated Contracting States: **AT BE CH DE FR IT LI LU NL SE**

(71) Applicant: **Birmid Qualcast (Home & Garden Equipment) Limited, Coleridge Street Sunnyhill, Derby DE3 7JT (GB)**

(72) Inventor: **Reynolds, John Alexander, Birmid Qualcast (Home & Garden Equipment) Ltd., Coleridge Street Sunnyhill Derby DE3 7JT (GB)**
Inventor: **Rudd, Michael, Birmid Qualcast (Home & Garden Equipment) Ltd., Coleridge Street Sunnyhill Derby DE3 7JT (GB)**
Inventor: **Cooper, John Samuel, Birmid Qualcast (Home & Garden Equipment) Ltd., Coleridge Street Sunnyhill Derby DE3 7JT (GB)**
Inventor: **Fisher, Kevin Michael, Birmid Qualcast (Home & Garden Equipment) Ltd., Coleridge Street Sunnyhill Derby DE3 7JT (GB)**

(74) Representative: **Sanders, Peter Colin Christopher et ai, BROOKES & MARTIN High Holborn House 52/54 High Holborn, London WC1V 6SE (GB)**

(54) Orbital cutting system.

(57) An orbital cutting system for mowing or trimming vegetation includes a cutter (21, 22) pivotally mounted on a rotary support head (20), the pivot (18) being displaced from the axis of the head such that the cutter (21, 22) orbits the axis when the head (20) is rotated. The cutter (21, 22) is displaceable outwardly from the axis between a detachable and a non-detachable position, the cutter being retained in its non-detachable position by centrifugal force when the head (20) is rotated at a sufficiently high speed and by additional retaining means (26, 27) when the centrifugal force reverses under heavy load.

"ORBITAL CUTTING SYSTEM"

This invention relates to an orbital cutting system for mowing or trimming vegetation, the system comprising at least one pivotally mounted cutter orbiting the axis of a rotary support head.

A known orbital cutting system consists of a rotary disc having one or more elongate blades pivotally mounted at its periphery. A cutting system of this type is shown, for example, in British Patent 1 570 252.

The device shown in Patent 1 570 252 is designed, however, for portable trimmer units which are used for cutting light growths of vegetation, and it would be inadequate for use in ground-supported lawnmowers where the cutting head is maintained in a fixed position close to the ground. In these circumstances air drag and grass drag on the rotary head can significantly affect performance.

One particular problem with prior devices of this type is that of the blade becoming detached from its mounting when under heavy load. This is at least partly due to the conflicting requirements of providing a blade which can be readily attached and detached while at the same time remaining securely in position when subjected to a heavy load in use.

Previous arrangements have also included those in which the blade must be precisely aligned in a predetermined direction before it can be fitted or removed from the head, the predetermined direction being outside the normal range of angular movement of the blade when in use. One such arrangement is shown, for example, in U.S. Patent 3 320 733. These arrangements may provide a more secure attachment but lack the ease of fitting and removal associated with rotary discs having snap-fitted orbital cutters.

An object of the present invention is to provide an arrangement in which the orbiting cutter can be attached or detached quickly and easily without the need for precise alignment in a predetermined direction but which still remains securely attached when under heavy load.

In accordance with the present invention there is provided an orbital cutting system in which the pivotally mounted orbital cutter is displaceable outwardly from the axis of the rotary head between a detachable and a non-detachable position, the cutter being retained in its non-detachable position by centrifugal force when the head is rotated at a sufficiently high speed and by additional retaining means when the centrifugal force reverses under heavy load. The cutter is preferably snap-fitted to the head in its detachable position.

The centrifugal force normally extends the cutter outwardly beyond the periphery of the head, and the additional retaining means then retain the cutter in its non-detachable position whenever a predetermined portion of the cutter is forced back within the periphery of the head under the heavy load.

The additional retaining means preferably comprise cooperating means disposed respectively on the predetermined portion of the cutter and on the head, the cooperating means including a projection on one of these members and means for tracking the projection on the other such that the cutter is constrained to follow a predetermined path. The tracking means may comprise, for example, a groove in the underside of the rotary head.

By way of example only, an orbital cutting system embodying the invention will now be described with reference to the accompanying drawings, in which:-

Fig. 1 is an underneath view of a cutter head for a ground-supported lawnmower;

Fig. 2 is a section on line D-D of Fig. 1;

Fig. 3 is a top plan view of the head shown in Figs. 1 and 2;

Fig. 4 is a scrap section on line G-G of Fig. 1;

Fig. 5 is a scrap section on line H-H of Fig. 1;

Fig. 6 is a side view of a pivot mounting for the cutting element in the head of Figs. 1-5;

Fig. 7 is a section on line A-A of Fig. 6;

Fig. 8 is a plan view of a cutter blade for mounting on the pivot of Figs. 6 and 7; and

Fig. 9 is a side view of the blade shown in Fig. 8.

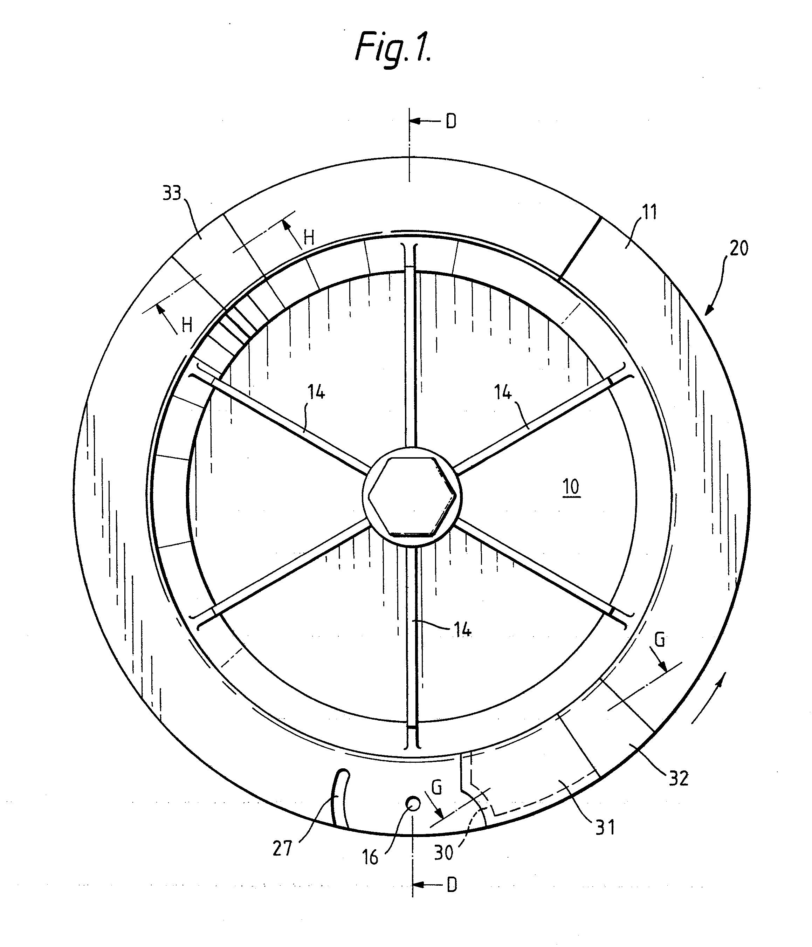

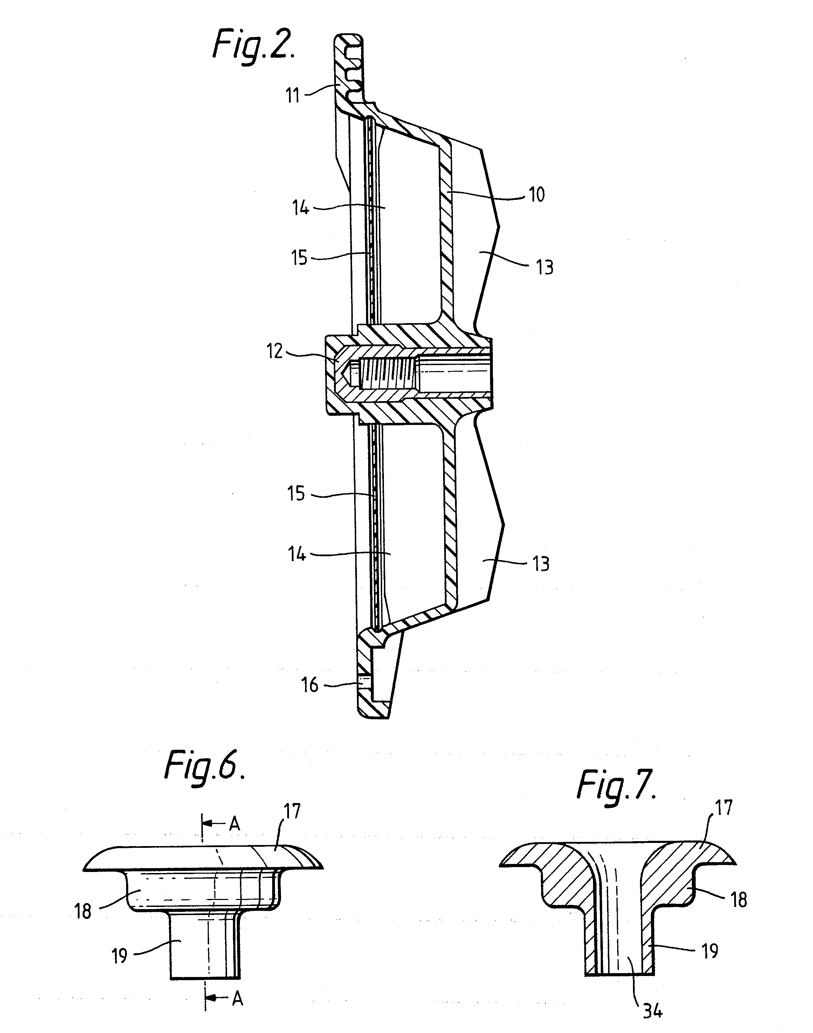

Referring to these Figures, the cutter head 20 shown in Figs. 1-5 is formed of plastics material and generally has the shape of a truncated cone with a flat disc top 10 and a peripheral flange 11. The centre of the head is moulded with a brass insert 12 for receiving a motor shaft (not shown). In use, the head 20 rotates about a substantially vertical axis, the flange 11 then being at a lower level than the central disc 10.

The upper surface of the central disc 10 has eleven equispaced fan blades 13 which draw a cooling flow of air over the motor when the head 20 is rotated.

The assembly is stabilised by means of six webs 14 located beneath the central disc 10. To prevent the resulting sector compartments formed by the webs from becoming clogged with grass cuttings, and to reduce both air and grass drag, a flat disc 15 is fitted beneath the webs 14 parallel to the central disc 10.

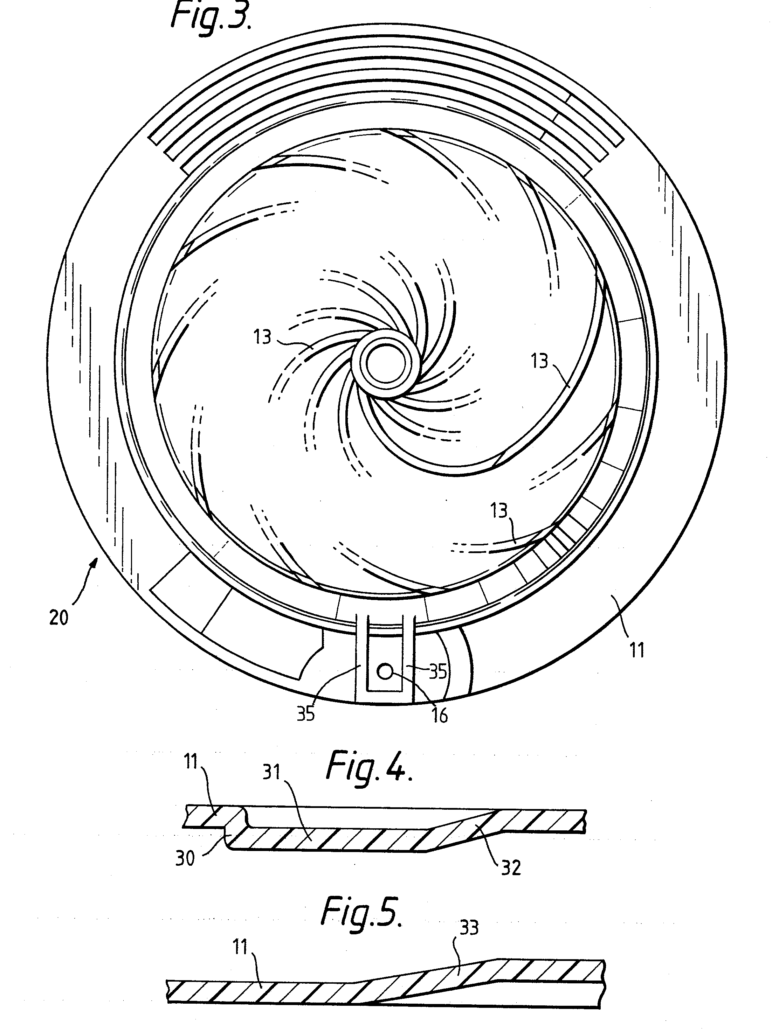

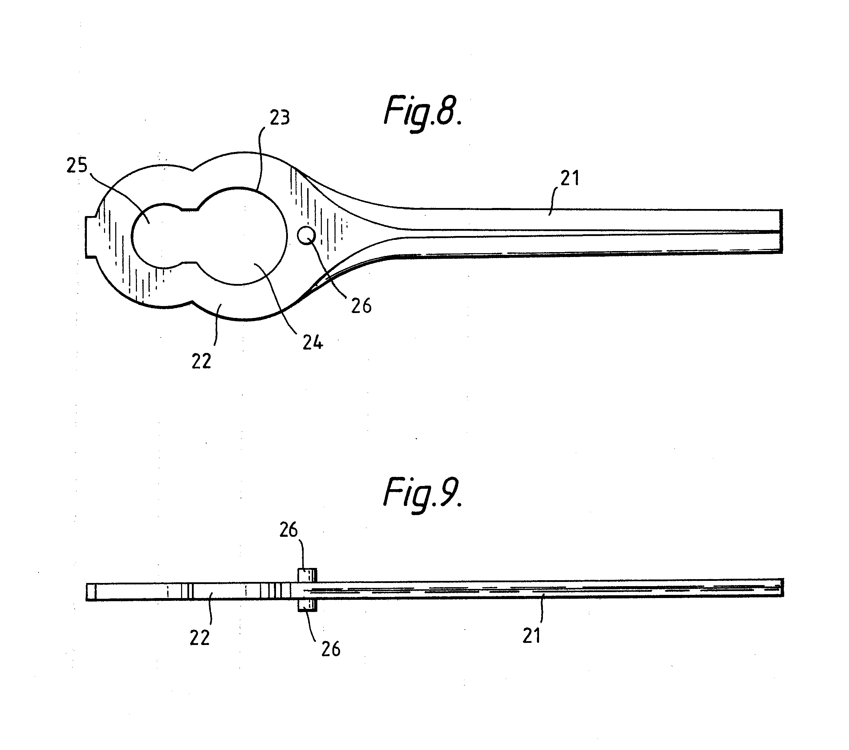

In practice, the flange 11 shown in Figs. 1-5 is provided with an eyelet for the pivoted mounting of either a plastic cutting blade or a length of flexible cutting line. A typical eyelet is shown in Figs. 6 and 7, the eyelet being riveted to the flange 11 through the small hole 16. When riveted in position, the enlarged head 17 of the eyelet is disposed beneath the flange 11 with the intermediate portion 18 bearing against the underneath surface of the flange, and the end portion 19 passing through the hole 16. A washer (not shown) is fitted underneath the rivetted head of the eyelet boss when it is attached to the flange, the washer nestling between the two ribs 35 (Fig. 3) and spreading the torque load on the plastic over a wider area.

A cutter blade for pivotal attachment to the eyelet is shown in Figs. 8 and 9. The blade consists of an elongate portion 21, the leading edge of which performs the cutting action, and an enlarged head portion 22 with a keyhole opening 23. The blade is reversible so that either edge can be used as the leading edge. The enlarged portion 24 of the keyhole opening 23 is a snap-fit over the head 17 of the eyelet. Once fitted, the blade can be pulled outwards until the intermediate portion 18 of the eyelet receives the reduced portion 25 of the keyhole opening 23. In this position the blade cannot be detached from the eyelet. The blade is retained in this non-detachable position by centrifugal force when the cutter head is subsequently rotated at high speed.

The blade also includes an opposed pair of "pips" 26, one of which enters a groove 27 (Fig. 1) in the underneath surface of the flange 11 whenever the blade is subjected to a heavy load. Such loads force the blade to pivot about the eyelet until a substantial portion of the blade lies within the periphery of the head 20. The pip 26 running in the groove 27 prevents the resulting reversal of centrifugal force on the blade from detaching the blade by preventing movement of the enlarged portion 24 of the keyhole opening 23 back into alignment with the head 17 of the eyelet.

The eyelet is protected from stones and other obstacles by a step 30 in the flange 11 immediately upstream of the eyelet in the direction of rotation. The direction of rotation is anticlockwise as viewed in Fig. 1 and the step 30 is shown most clearly in the scrap section of Fig. 4. It can be seen from this section that the step 30 is itself protected by extending it back parallel to the flange 11 for a short length 31 and then providing a lead-in ramp 32. It can also be seen from Fig. 1 that the trailing edge of the step 30 is profiled to accommodate the head 22 of the blade should the blade swing forward of its radial position during cutting.

The opposite side of the cutter head 20 is weighted to counterbalance the eyelet and the blade, and the flange 11 is therefore similarly ramped at 33 as shown in Figs. 1 and 5.

Instead of attaching a blade to the eyelet of Figs. 6 and 7, an alternative cutting element in the form of a short length of nylon line can be connected to the eyelet. For example the line can be passed through the eyelet with a small blob at one end to prevent it running through the eyelet hole 34 when the head is rotated. The inside of the hole 34 is radiused to stop the nylon line chafing and, as shown in Figs. 6 and 7, the outer edge of the eyelet is also provided with a part-radius profile to prevent any possibility of the metal edge cutting the line. Alternatively the line might be connected to a keyhole loop which is snapped on to the eyelet in the same manner as the cutter blade.

## CLAIMS

1.    An orbital cutting system for mowing or trimming vegetation, the system comprising a cutter pivotally mounted on a rotary support head, the pivot being displaced from the axis of the head such that the cutter orbits the said axis when the head is rotated, and characterised by the cutter being displaceable outwardly from the axis between a detachable and non-detachable position, the cutter being retained in its non-detachable position by centrifugal force when the head is rotated at a sufficiently high speed and by additional retaining means when the centrifugal force reverses under heavy load.

2.    A system according to Claim 1 in which the pivotal mounting of the cutter in its detachable position comprises a snap-fit.

3.    A system according to Claim 1 or Claim 2 in which the centrifugal force normally extends the cutter outwardly beyond the periphery of the head, and in which the additional retaining means retain the cutter in its non-detachable position whenever a predetermined portion of the cutter is forced back within the periphery of the head under the heavy load.

4.    A system according to Claim 3 in which the additional retaining means comprise cooperating means disposed respectively on the said portion of the cutter and on the head, the cooperating means including a projection on one of these members and means for tracking the projection on the other member such that the cutter is constrained to follow a predetermined path.

0132385

5.   A system according to Claim 4 in which the tracking means comprises a groove in the underside of the head.

6.   A system according to any one of the Claims 1 to 5 in which the cutter is pivotally mounted on the underside of the rotary head whereby the cutter orbits the said axis in a plane disposed beneath the head.

7.   A system according to Claim 6 in which the underside of the head includes means for guarding the pivotal mounting against the impact of stones or other solid obstacles during rotation of the head, the guard means being disposed immediately upstream of the pivot relative to the direction of rotation.

8.   A system according to Claim 7 in which the guard means comprises a step having a ramped leading edge.

9.   A system according to Claim 8 in which the step includes a profiled trailing edge to accommodate pivotal movement of the cutter head.

10.   A system according to Claim 1 in which the pivotal mounting includes a pivot pin fixed to the head, the cutter comprising a blade having an opening for receiving the pin with a snap-fit, and the system further comprising a second cutter interchangeable with the said blade, the second cutter comprising a length of flexible line and means for retaining one end of the line at the pin.

11.   A system according to any one of the preceding claims further comprising means for mounting the head for rotation about the said axis, and powered drive means for driving the head.

12.    A system according to Claim 11 in which the head comprises a truncated cone with a peripheral base flange, the cutter being pivoted on the flange.

13.    A system according to Claim 12 in which a flat disc covers the top of the truncated cone, the disc having a plurality of upstanding angularly spaced fan blades to draw a flow of cooling air over the powered drive means.

14.    A system according to Claim 13 in which the underside of the disc is further provided with a plurality of angularly spaced stabilising webs, and in which a second disc substantially parallel to the top disc is disposed beneath the said webs to reduce windage, grass drag and clogging.

15.    An orbital cutting system for mowing or trimming vegetation, the system comprising a cutter pivotally mounted on a rotary support head, the pivot being displaced from the axis of the head such that the cutter orbits the said axis when the head is rotated, and characterised by the cutter being pivotally mounted on the underside of the rotary head whereby the cutter orbits the said axis in a plane disposed beneath the head.

16.    A system according to Claim 15 in which the underside of the head includes means for guarding the pivotal mounting against the impact of stones or other solid obstacles during rotation of the head, the guard means being disposed immediately upstream of the pivot relative to the direction of rotation.

17.    An orbital cutting system for mowing or trimming vegetation, the system comprising a cutter pivotally mounted on a rotary support head, the pivot being displaced from the axis of the head such that the cutter
orbits the said axis when the head is rotated, the
pivotal mounting including a pivot pin fixed to the head,
the cutter comprising a blade having an opening for
receiving the pin, and the system further comprising
a second cutter interchangeable with the said blade,
the second cutter comprising a length of flexible line
and means for retaining one end of the line at the pin.

18. An orbital cutting system for mowing or trimming
vegetation, the system comprising a cutter pivotally
mounted on a rotary support head, the pivot being displaced from the axis of the head such that the cutter
orbits the said axis when the head is rotated, means
for mounting the head for rotation about the said axis,
and powered drive means for driving the head, and
characterised in that the head comprises a truncated
cone with a peripheral base flange, the cutter being
pivoted on the flange, and the head being stabilised
by angularly spaced radially extending webs disposed
within the cone between a pair of substantially
parallel flat discs.

0132385

# Fig.1.

0132385

**Fig.2.**

**Fig.6.**

**Fig.7.**

*Fig.3.*

*Fig.4.*

*Fig.5.*

**Fig.8.**

**Fig.9.**

**European Patent Office**

**EUROPEAN SEARCH REPORT**

Application number

| | DOCUMENTS CONSIDERED TO BE RELEVANT | | EP 84304932.1 |
|---|---|---|---|

| Category | Citation of document with indication, where appropriate, of relevant passages | Relevant to claim | CLASSIFICATION OF THE APPLICATION (Int. Cl.4) |
|---|---|---|---|
| D,Y | <u>GB - A - 1 570 252</u> (TRUE TEMPER CORPORATION) <br> * Totality * | 1-6, 11,12 | A 01 D 34/73 <br> A 01 G 3/00 |
| A | | 10,15, 17,18 | |
| | -- | | |
| Y | <u>GB - A - 1 236 158</u> (GEBR. WELGER) <br> * Totality * | 1-6, 11,12 | |
| X | | 15 | |
| A | | 18 | |
| | -- | | |
| A | <u>GB - A - 1 362 098</u> (VICTA LIMITED) <br> * Fig. 2,6 * | 1,6,11, 12,17, 18 | |
| X | | 15 | TECHNICAL FIELDS SEARCHED (Int. Cl.4) |
| A | <u>DE - A - 1 923 411</u> (TEXAS INDU-STRIES INC.) <br> * Fig. 1-6 * | 1,3-6, 11,12, 17,18 | A 01 D 34/00 <br> A 01 G 3/00 |
| X | | 15 | |
| | -- | | |
| A | <u>US - A - 3 690 051</u> (WOOD) <br> * Fig. 2-7; column 4, lines 1-25 * | 1,3 | |
| | -- | | |
| A | <u>DE - A1 - 2 453 181</u> (C.L. FROST & SON) <br> * Fig. 1,2 * | 18 | |
| | -- | | |

The present search report has been drawn up for all claims

| Place of search | Date of completion of the search | Examiner |
|---|---|---|
| VIENNA | 15-10-1984 | SCHWAB |

European Patent Office

Application number

EP 84304932.1

**EUROPEAN SEARCH REPORT**

| Category | Citation of document with indication. where appropriate. of relevant passages | Relevant to claim |
|---|---|---|
| A | <u>DE - A1 - 2 829 348</u> (KALMAR) ---- | |

## DOCUMENTS CONSIDERED TO BE RELEVANT

**CLASSIFICATION OF THE APPLICATION (Int. Cl.)** 4

**TECHNICAL FIELDS SEARCHED (Int. Cl.)** 4